# EUROPEAN PATENT SPECIFICATION

(11) **EP 2 628 519 B1**
(45) Date of publication and mention of the grant of the patent: **25.10.2017**
(21) Application number: 12159576.3
(22) Date of filing: 15.03.2012
(51) Int. Cl.: B01D 33/11, C02F 11/12, F26B 11/04

(54) **Device for removing liquid**
Vorrichtung zur Entfernung von Flüssigkeit
Dispositif d'élimination de liquides

(30) Priority: 15.02.2012 EP 12155613
(43) Date of publication of application: 21.08.2013
(73) Proprietor: Alfa Laval Corporate AB, 221 00 Lund (SE)
(72) Inventor: Madsen, Morten, 2000 Frederiksberg (DK)
(74) Representative: Alfa Laval Attorneys

(56) References cited:
- EP-A1- 0 353 314
- DE-A1- 4 342 808

## Description

### Technical Field

The invention relates to a device for removing a liquid from a product to achieve a concentrate. The device comprises a rotatable drum permeable to the liquid, which drum has an inlet at which the product is fed into the drum and an outlet at which the concentrate is fed out of the drum. The device further comprises a first number of baffles arranged separated from each other inside the drum. Each of the baffles projects in a direction from an inner wall of the drum towards a longitudinal center axis of the drum and extends in a circumferential direction of the drum.

### Background Art

In connection with, for example, conventional waste water treatment, sludge is produced. Sludge typically consists of suspended organic and inorganic solids as well as dissolved solids in a large amount of water. To prepare the sludge for further treatment it is normally fed to a dewatering unit for removal of water and concentration of the solids content. Normally, removal of as much water as possible from the sludge is desired. To assure an effective dewatering process in the dewatering unit, the sludge is typically treated inside a flocculation device before being fed to the dewatering unit. In the flocculation device the sludge is mixed with a flocculation agent which makes the solids in the sludge agglomerate into larger lumps or flocks which are easier to separate from the water than the individual solid particles.

Dewatering units, or liquid separation devices, for treatment of sludge or slurry are known within the art, for example through US 3,695,448. Herein described is a device comprising a rotating perforated drum and a number of flanges fastened to the inner wall of the drum. The slurry is fed forwards through the drum by means of some of the flanges. The rest of the flanges are arranged so as to feed the slurry in the opposite direction. When the slurry is fed through the drum, liquid leaves the drum through the perforations thereof whereby the slurry is thickened. Between a flange for forward feeding and a flange for opposite feeding, the slurry may be subjected to a pressing operation for increasing the dewatering. Such pressing occurs in dependence upon the rotational position of the drum, or more particularly the flanges. The slurry inside the drum is fed through the same as long as new slurry is fed into the drum. If the feeding of new slurry into the drum ceases, some of the slurry inside the drum will remain therein, whereby a manual operation is required for emptying and cleaning the drum. Further, the flange design and flange orientation differs from flange to flange to achieve the desired feeding, and thus pressing, which makes the device relatively complex and costly to manufacture.

DE 4342808 discloses a device for thickening of sludge comprising a drum inside which one or more spirals is arranged.

### Summary

An object of the present invention is to provide an improved device for removing liquid from a product that at least partly eliminate potential limitations of prior art. The basic concept of the invention is to provide a number of elements inside the drum that increase the liquid separation or removal irrespective of the rotational position of the drum and that promote automatic emptying of the drum in case the feeding of new product to the drum ceases. The elements need not be designed or orientated differently as compared to one another to achieve these effects.

The device for achieving the object above is defined in the appended claims and discussed below.

A device for removing a liquid from a product to achieve a concentrate according to the present invention comprises a rotatable drum permeable to the liquid, which drum has an inlet at which the product is fed into the drum and an outlet at which the concentrate is fed out of the drum. The device further comprises a first number of baffles arranged separated from each other inside the drum. Each of the baffles projects in a direction from an inner wall of the drum towards a longitudinal center axis of the drum and extends in a circumferential direction of the drum. Each of the baffles extends more than 360 degrees around the longitudinal center axis of the drum so as to form of a three dimensional spiral. Thereby, an overlap is formed of two opposite end parts of each of the baffles, which opposite end parts are arranged separated from each other. Further the spiral encircles only a part of the longitudinal center axis of the drum between the inlet and the outlet.

Since the drum is permeable to the liquid contained in the product, liquid leaves the drum through the walls of the same when the product is fed through the drum. The solids of the product cannot move through the drum walls but remain within the drum until they leave the drum through the outlet in the form of a concentrate.

The number of baffles is more than one, i.e. the first number > 1.

Since each of the baffles projects in a direction from an inner wall of the drum towards a longitudinal center axis of the drum and extends in the circumferential direction of the same, the free path through the drum is limited at the positions of the baffles. Further, since each of the baffles extends more than one complete turn about the longitudinal center axis of the drum, it will constitute an obstacle to the product fed through the drum irrespective of the rotational position of the drum.

For a specific baffle design, the size of the overlap between the two end parts of the baffle is naturally dependent upon how many degrees over 360 degrees that the baffles extend about the longitudinal center axis of the drum. Consequently, a 500 degrees baffle extension gives a larger overlap than a 450 degrees baffle extension. Since the end parts of each of the baffles are arranged with a mutual distance, there is a free passage, between the end parts, past each baffle for the product fed through the drum. Thus, the product may pass a baffle either through this free passage, i.e. between the two end parts, or through a center of the baffle spiral, i.e. over the baffle.

Since the spiral formed by each of the baffles encircles only a part of the longitudinal center axis of the drum between the inlet and the outlet, and the spirals or baffles are arranged separated from each other, the feeding speed of the product through the drum may vary along the drum.

The baffles serve to slow down a flow of the product through the drum so as to prolong a residence time of the product inside the drum to, in turn, enable removal of as much liquid as possible from the product. Each of the baffles functions as an obstacle to the product fed through drum and causes a level of product inside the drum to rise in front of the baffle, seen in a direction from the inlet to the outlet of the drum. When the product level rises, the product is pressed harder towards inner wall of the drum, which further increases the removal of liquid from the product.

Further, because of the free passage past each of the baffles, between the respective two end parts thereof, automatic emptying of the drum, for example in the case of interrupted feeding of new product into the drum, is enabled. Thus, the device can be made to incorporate a self-cleaning functionality.

The device is characterized in that each of the baffles has an outer long side extending along, and adjacent to, the inner wall of the drum, an inner long side extending along, and at a distance from, the inner wall of the drum, and first and second short sides, each extending between the outer long side and the inner long side, the first short side and the outer long side intersecting in a first point and the second short side and the outer long side intersecting in a second point, wherein the overlap is so large that an imaginary straight line drawn between the first and the second point is tangent to the inner long side or extends within the inner long side seen from the longitudinal center axis of the drum, i.e. between the longitudinal center axis of the drum and the inner long side.

The first and second short sides of the baffles are comprised in, and delimit, a respective one of the two opposite end parts of the baffle. The outer long side of the baffle defines the outer contour of the baffle spiral while the inner long side defines the inner contour of the baffle spiral, seen from the longitudinal center axis of the drum. When the overlap is smaller than specified above, the imaginary line between the first and second points will be drawn through the very baffle. When the overlap increases, a center point of the imaginary line moves towards the longitudinal center axis of the drum, i.e. a center of the spiral, until the overlap corresponds to halve a baffle turn, i.e. 180 degrees. Thereafter, the center point of the imaginary line moves away from the center of the spiral until the overlap corresponds to a complete baffle turn, i.e. 360 degrees. The specific overlap resulting in that the imaginary line between the first and the second point is tangent to the inner long side of the baffle is the optimum one. At this specific overlap the product may be trapped in front of the baffle as long as possible for a specific baffle design which promotes the liquid removal. More particularly, with this specific overlap, the product in front of the baffle cannot pass the baffle through the free passage between the end parts of the baffle before the product level reaches the inner long side of the baffle and the product can pass over this inner long side. At overlaps larger than this optimum one, the product may be trapped in front of the baffle for just as long, but larger overlaps demand more material which is disadvantageous from an economical point of view. At overlaps smaller than the optimum one, the time that the product is trapped in front of the baffle may be shorter since the product in front of the baffle can pass between the end parts of the baffle before the product level reaches the inner long side of the baffle.

The device may be such that the drum is arranged to be tilted in relation to a horizontal plane such that the longitudinal center axis of the drum is inclined downwards in a direction from the inlet to the outlet of the drum. Thereby, the feeding of the product through the drum, from the inlet to the outlet of the same, is facilitated and the self-cleaning functionality of the drum is promoted.

The baffles of the device may be rotatable. Because of gravity the product tend to accumulate in a bottom of the drum. By having rotatable baffles the self-cleaning functionality of the drum is promoted since it becomes possible for all, deliquefied to some extent, to eventually pass each of the baffles by being taken into and conveyed through the free passage between the two end parts.

The baffles of the device may be fixed in relation to the drum. Since the drum is rotatable, this configuration, which is relatively mechanically straightforward, makes the baffles automatically rotatable.

The device may further comprise a second number of primary rims or sleeves encircling the longitudinal center axis of the drum, wherein this second number ≥ the first number. Each of the baffles is surrounded and supported by a respective one of these primary rims. The sleeve thus functions as a seat for the baffle. Thereby, the maintaining of the spiral shape of the baffle is facilitated, and correct as well as stable positioning of the baffle in relation to the drum is also facilitated.

The device may further be such that is comprises an elongate hub extending inside the drum and along the longitudinal center axis of the same and spokes extending from the hub, the spokes connecting, indirectly or directly, the primary rims to the hub. Accordingly, the primary rims, and thus the baffles, may be arranged to rotate with the hub which is a mechanically straightforward solution to make the baffles rotatable.

Further, the device may comprise a filter cloth permeable to the liquid, which filter cloth engages with, and is distended by, the primary rims to form the drum. Thereby, the primary rims functions as a framework defining the shape of the drum whose walls comprise a layer of filter cloth. The use of filter cloths in connection with different types of separation is well-known and effective.

The filter cloth may be arranged outside the primary rims seen from the longitudinal center axis of the drum, which enables a relatively mechanically simple and robust device.

The number of baffles, i.e. the first number, may be ≥ 3, whereby the device may comprise at least a first, a second and a third baffle. Further, the first baffle may be arranged at a first distance from the inlet of the drum, the second baffle may be arranged at a second distance from the inlet of the drum and the third baffle may be arranged at a third distance from the inlet of the drum, where the third distance > the second distance > the first distance, and the second distance - the first distance < the third distance - the second distance. This design enables a device with larger baffle density closer to the inlet of the drum. This configuration is beneficial since most of the total amount of liquid removed from the product is removed at the beginning of the drum, close to the inlet of the same.

A trough for collecting the liquid removed from the product may further be comprised in the device. The trough is arranged under the drum and has a drain for discharging the liquid, which drain is arranged closer to the outlet of the drum than to the inlet of the drum. As mentioned above, the liquid removal is larger close to the drum inlet than close to the drum outlet. Further, even if it is desirable to have a drum only permeable to pure liquid, in reality, a certain extent of very small solid particles may penetrate through the wall of the drum together with the liquid when the product is fed through the drum. The amount of small solid particles compared to the amount of liquid leaving the drum is considerably higher at the outlet than at the inlet of the drum. In other words, the liquid leaving the drum in the beginning of the same is less contaminated by solids than the liquid leaving the drum at the end of the same. Arranging the drain of the trough close to the drum outlet is beneficial when it comes to the hygiene of the device since it may promote the draining, from the trough, of small solid particles. This is not only due to the fact that the distance to the drain for the small solid particles leaving the drum close to the outlet of the same is relatively short. It is also due to the fact that the less contaminated liquid leaving the drum close to the inlet of the same must be conveyed through the trough to the drain to be drained, and on its way there, it will flush the small solid particles along.

The trough may have a bottom wall arranged with a slope towards the drain. Naturally, this will promote, even further, the draining of both the liquid and the small solid particles from the trough.

The device can be used for treatment of a product in the form of sludge. The sludge may, as mentioned by way of introduction, be generated in connection with waste water treatment.

### Brief Description of the Drawings

The invention will now be described in more detail with reference to the appended schematic drawings, in which
Fig. 1 is a perspective view of a device according to one embodiment of the present invention,
Fig. 2 is a side view of the device in Fig. 1.
Fig. 3 is a perspective view of a part of the device illustrated in Figs. 1 and 2.
Figs. 4a and 4b are perspective views illustrating components of the part shown in Fig. 3 in further detail.
Fig. 4c is a schematic plan view illustrating components of the part shown in Fig. 3 in further detail.
Figs. 5a and 5b are perspective and top views, respectively, of another part of the device illustrated in Figs. 1 and 2.

### Detailed description

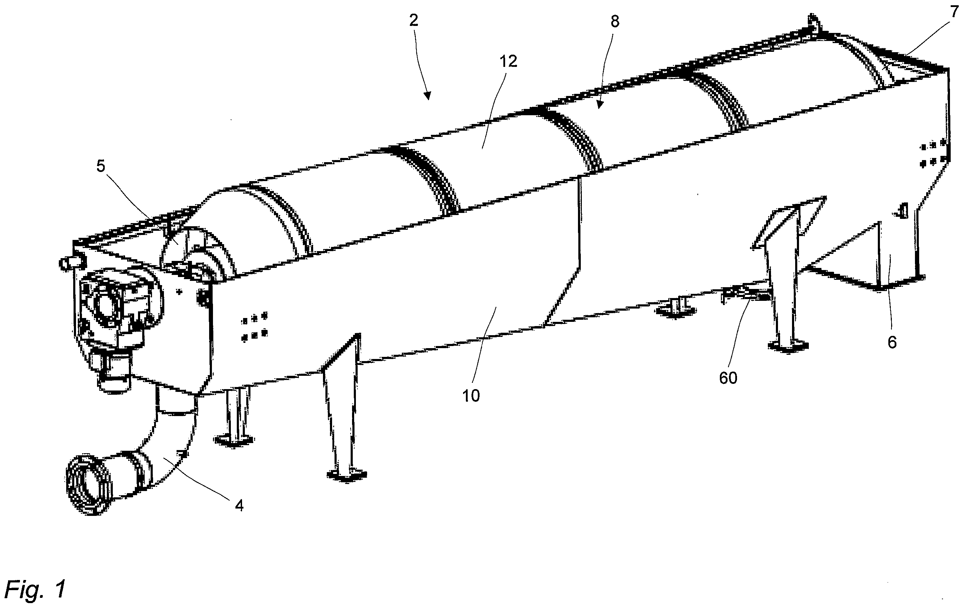

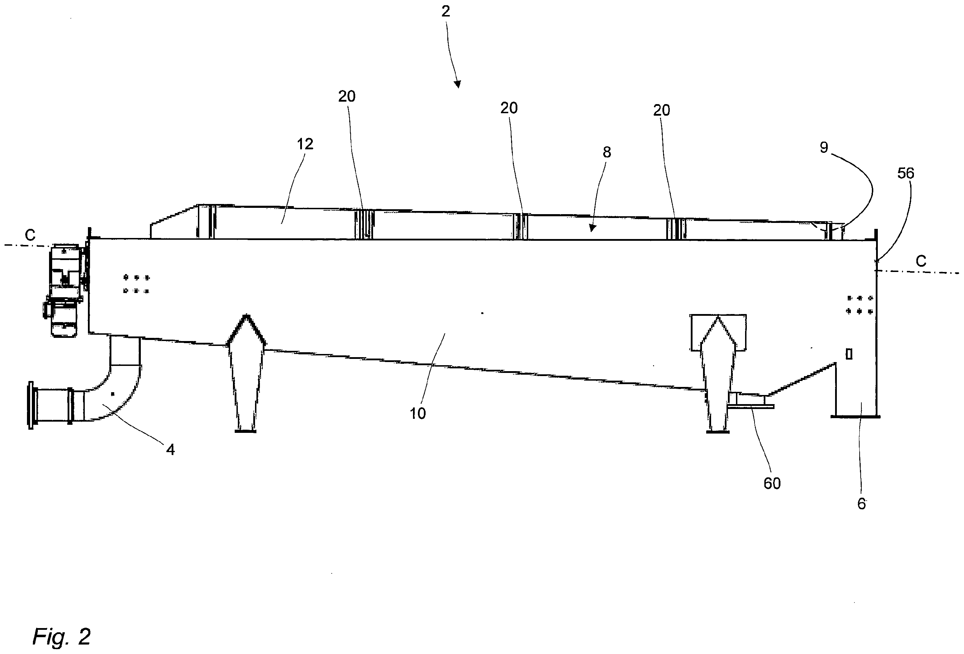

With reference to Figs. 1 and 2, a device 2 for removing a liquid from a product to achieve a concentrate, is shown. The liquid to be removed from the product is water, why dewatering is an alternative term for the process performed by means of the device 2. The product to be treated by means of the device 2 is sludge produced in connection with waste water treatment as mentioned by way of introduction. When removing water from the sludge, the solids remain as a concentrate ready for further handling as desired. For example, such further handling could involve burning of the solids concentrate to generate energy.

The device 2 comprises an infeed 4, an outfeed 6, a drum 8 having, at one end, an inlet 5 communicating with the infeed 4, and, at the other end, an outlet 7 communicating with the outfeed 6, and a trough 10 arranged under the drum 8 and partly enclosing the same.

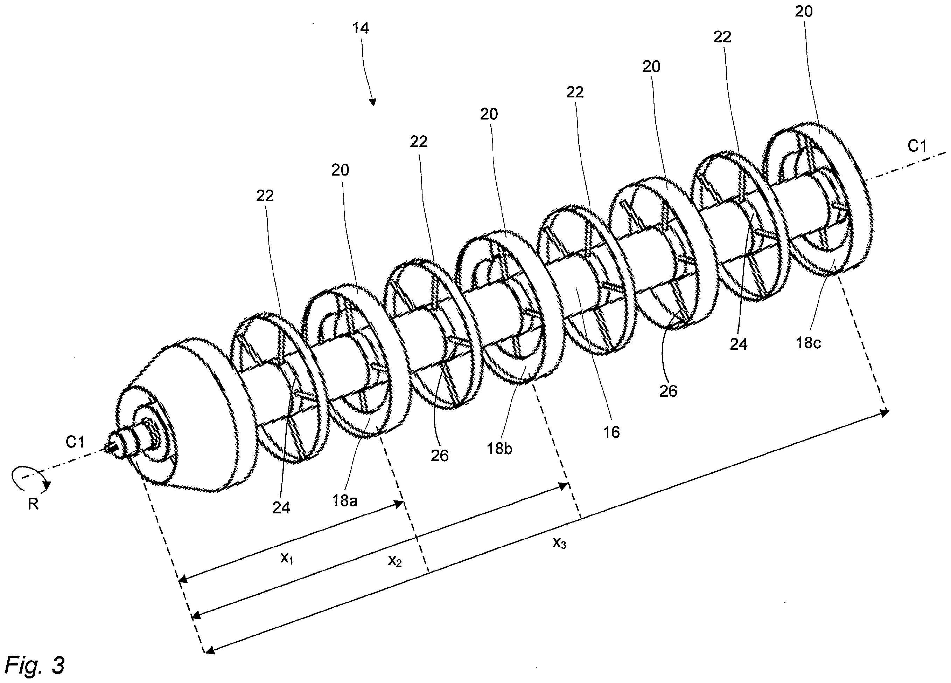

The drum 8 essentially has an outer shape of a circular cylinder with a longitudinal center axis C. It is made of a filter cloth 12 distended by a stainless steel frame work 14 enclosed by the filter cloth 12 and illustrated in detail in figure 3. The filter cloth 12, and thus the walls of the drum, is permeable to water but essentially non-permeable to solids.

The frame work 14 comprises an elongate hub 16 with a longitudinal center axis C1 arranged to extend centrally inside the drum 8, the longitudinal center axes C and C1 of the drum 8 and the hub 16, respectively, coinciding. The frame work 14 further comprises a first number of baffles 18 (which include baffles denoted 18a, 18b and 18c), here three, a second number of primary rims 20, here 4, a third number of secondary rims 22, here 4, and second number + third number, that is 8 here, connection rims 24. Additionally, the frame work 14 comprises a plurality of spokes 26. The connections rims 24 are arranged fixed around the hub 16 and separately along the same, as illustrated in the figure. The primary and the secondary rims 20 and 22, respectively, are also arranged around the hub, essentially concentrically with each other and with the hub, and aligned, along the longitudinal center axis C1, with the connection rims 24. Each of the connection rims 24 is connected to either one of the primary rims 20 or one of the secondary rims 22 through a respective set of the spokes 26, each of the spokes extending essentially radially from the hub 16 and engaging with the respective connection rim at one end and the respective primary or secondary rim at the other end. The filter cloth 12 is fixed to the primary rims 20 by means of a suitable adhesive to maintain the desired circular cylinder shape of the drum 8.

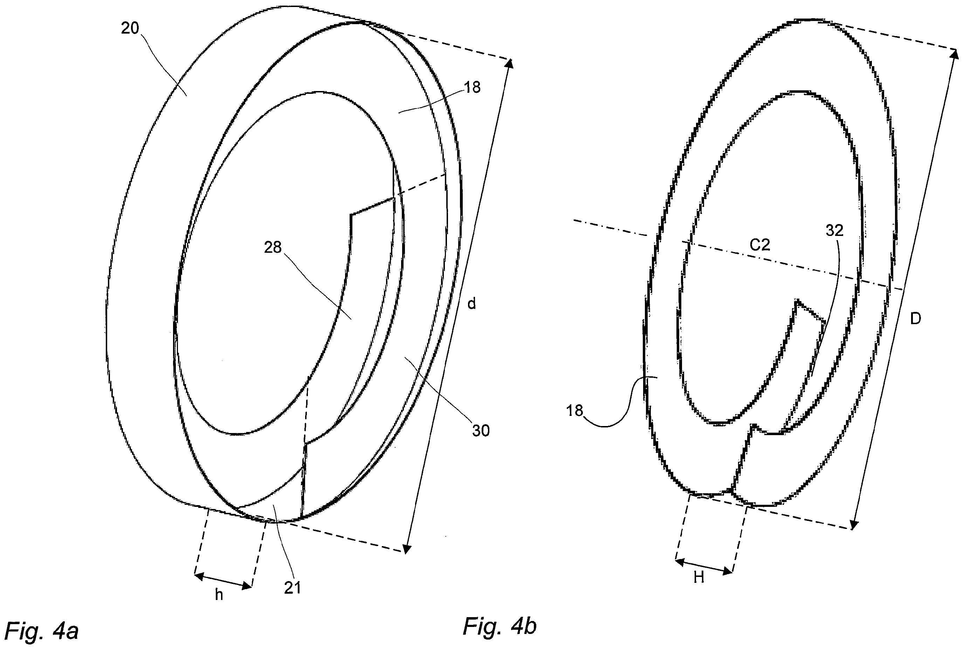

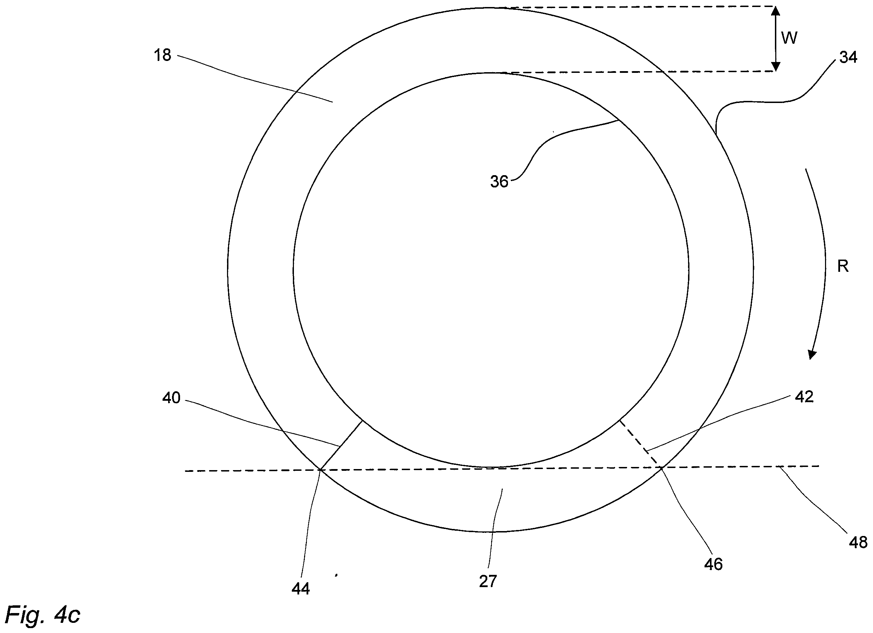

The baffles 18 are similar and the primary rims 20 are similar. In the following, the baffles and the primary rims will be described more closely with reference to one of the baffles and one of the primary rims, which are illustrated in Fig. 4a. In Figs. 4b and 4c only the baffle is illustrated. The baffle 18 is essentially a strip of width W of stainless steel formed into a three dimensional spiral with an outer diameter D which is essentially similar to an inner diameter d of the primary rim 20. Further, the spiral or baffle 18 has a height H, i.e. an extension along a center axis C2 of the spiral, which is essentially similar to a height h of the primary rim 20. The baffle 18 is arranged in the primary rim 20 and fixed to the same by welding. The welding is made along an outer long side 34 of the baffle 18 and an inside 21 of the primary rim 20 such as to shut any gap between the baffle and the primary rim.

Thus, in the frame work 14 the baffle 18 encircles the hub 16, the center axis C2 of the baffle or spiral coinciding with the longitudinal center axis C1 of the hub 16. The baffle 18 extends more than 360 degrees around the hub 16. Thereby, an overlap 27 (which will be further discussed below) corresponding to the baffle extension exceeding 360 degrees is formed of two opposite end parts 28 and 30 of the baffle 18, i.e. two opposite end parts of the spiral shaped strip. The end parts 28 and 30 of the baffle 18 are arranged separated from each other along the center axis C2 of the baffle whereby a free passage 32, between the end parts, past the baffle is formed. This free passage will be further discussed herein below. As mentioned above, the baffle 18 has an outer long side 34 along which the baffle is fixed to the primary rim 20. Further, the baffle has an inner long side 36 extending along the outer long side 34 and between this and the center axis C1 of the hub, a first short side 40 and a second short side 42 (illustrated with a dashed line in Fig. 4c), which short sides extend between the inner and outer long sides. The first short side 40 and the outer long side 34 intersect in a first point or edge 44 while the second short side 42 and the outer long side 34 intersect in a second point or edge 46. The baffle overlap 27 is such that an imaginary line 48 drawn between the first and second points 44 and 46, respectively, is tangent to the inner long side 36 of the baffle.

Thus, since each of the baffles 18 are fixedly seated in a respective one of the primary rims 20, they are fixed in relation to the hub 16 and separately arranged along the longitudinal center axis C of the drum 8. The baffles 18 project from the inside 21 of the respective primary rim 20, i.e. from an inner wall 9 (Fig. 2) of the drum, towards the longitudinal center axis C of the drum, and they extend in a circumferential direction of the drum. As mentioned above, here there are three baffles; a first baffle 18a, a second baffle 18b and a third baffle 18c. As apparent from Fig. 3, they are not evenly distributed along the hub 16 and thus the drum 8. Instead, the density of baffles is higher closer to the inlet 5 of the drum than closer to the outlet 7 of the drum. More particularly, the first, second and third baffles are arranged at a first distance x₁, a second distance x₂ and a third distance x₃, respectively, from the inlet of the drum, where x₁ < x₂ < x₃. Further, x₂ - x₁ < x₃ - x₂ meaning that the distance between the first and second baffles 18a and 18b, respectively, are smaller than the distance between the second and third baffles 18b and 18c, respectively. This varying baffle density is due to that the main part of the total dewatering that is performed through the drum takes place close to the inlet 5 of the drum.

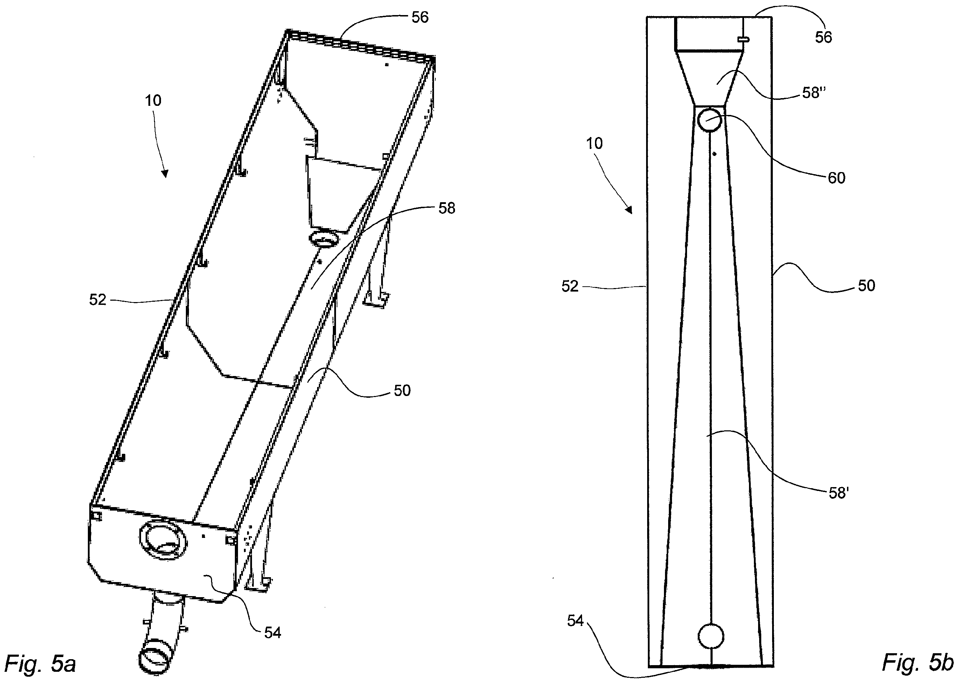

The hub 16, and therefore the drum 8, is freely rotatably arranged in the trough 10 about the longitudinal center C in a direction R (Fig. 3). The suspension of the hub 16 inside the trough 10 is conventional and will not be further described herein. The longitudinal center axes C is non-horizontal and tilts downwards in a direction from the inlet 5 to the outlet 7 of the drum, as is apparent from Fig. 2. The trough 10, which is illustrated in more detail in Figs. 5a and 5b, is provided to collect the water removed from the sludge. It comprises two long side walls 50 and 52, respectively, two short side walls 54 and 56, respectively, a bottom wall 58, and a drain 60 for emptying the trough. As apparent especially from Figs. 1 and 2, in the assembled device 2, the drain 60 is arranged closer to the outlet 7 than to the inlet 5 of the drum 8. The bottom wall 58 of the trough 10, which is comprised of two parts 58' and 58", is not horizontal but tilts towards the drain 60, the two parts 58' and 58" tilting towards each other, to facilitate drainage of the trough. These features provide the device with a self-cleaning effect that will be further discussed below.

The operation of the device 2 will now be described with reference to the drawings. When the device 2 is operated, the hub 16 and thus the baffles 18 as well as the drum 8, is rotated about the axis C, in the direction R (which is the clockwise direction as seen in Fig. 4b). Sludge is fed, from a supply not illustrated, to the device 2 through the infeed 4 of the same and further into the drum 8 through the inlet 5 of the same. After entering the drum, the sludge will be spontaneously fed through the drum, from its inlet towards its outlet, due to the above mentioned tilting of the drum. When fed through the drum, the sludge is dewatered gradually, which means that the water leaves the drum through the filter cloth 12, while most of the solids remain inside the drum. When the dewatered sludge reaches the outlet 7 of the drum, it is fed out of the drum and further out of the device 2 through the outfeed 6 of the same.

Due to gravity, the sludge will be fed through the drum at a bottom of the same. Close to the inlet 5 of the drum, the water content of the sludge is relatively high and the sludge is "flowing" resulting in a relatively constant and even level of sludge inside the drum. Close to the outlet 7 of the drum, the water content of the sludge is relatively low and the sludge is tumbling or rolling like a sausage inside the drum.

Because of the presence of the baffles 18 inside the drum, the sludge does not have a free path through the drum. The baffles slow down the sludge feeding through the drum. The sludge is, more particularly, collected in front of the baffles 18, i.e. to the left of the baffles as seen in Fig. 2, which increases the time that the sludge is kept inside the drum. In turn, this increases the dewatering of the sludge and thus the efficiency of the device. The sludge is kept in front of the baffles until it can pass the same. During this time, the sludge is pressed, by its own weight, relatively hard against the walls of the drum, which also increases the dewatering. The sludge can pass the baffles 18 either through the free passage 32 between the end parts 28 and 30, respectively, or over the inner long side 36. The latter alternative is possible when the level of sludge in front of the baffle exceeds the inner long side 36 of the baffle.

The width of the free passage 32 naturally have an effect on the dewatering. A wider free passage involves feeding of more sludge past the baffle at a time, and a shorter retention time of the sludge in front of the baffle, than is the case with a more narrow free passage. Thus, the dewatering is increased with more narrow free passage. Additionally, also the rotation speed of the drum 8 has an impact on the dewatering as a higher rotation speed results in a shorter retention time of the sludge in front of the baffle than is the case with a slower rotation speed. Thus, the dewatering is increased with a slower rotation speed. The suitable free passage width and the suitable drum rotation speed is dependent on the specific application of the device.

The overlap 27 of the baffles 18 as specified above and as illustrated in Fig. 4c is the optimum one. At this specific overlap the sludge may be trapped in front of the baffle 18 as long as possible for a specific baffle design which promotes the dewatering. More particularly, with this specific overlap, the sludge in front of the baffle cannot pass the baffle through the free passage 32 between the end parts of the baffle before the sludge level reaches the inner long side 36 of the baffle and the sludge can pass over this inner long side. At overlaps larger than this optimum one, the sludge may be trapped in front of the baffle for just as long, but larger overlaps demand more strip material which is disadvantageous from an economical point of view. At overlaps smaller than the optimum one, the time that the sludge is trapped in front of the baffle may be shorter since the sludge in front of the baffle can pass between the end parts of the baffle before the sludge level reaches the inner long side of the baffle.

For a specific baffle design, a certain baffle extension angle exceeding 360 degrees result in a certain overlap. For each baffle design, i.e. for each combination of spiral outer diameter D and strip width W there is a specific optimum overlap. In other words, the value of the optimum baffle extension angle is determined by the dimensions of the baffle.

The water leaving the drum 8 is collected by the trough 10. Also some small solids will manage to penetrate through the filter cloth 12 and leave the drum together with the water. Of course, these solids are also collected by the trough 10. The amount of solids relative to the amount of water leaving the drum close to the inlet 5 of the same is much less than close to the outlet 7 of the same. By the drain 60 being positioned closer to the outlet 7 than to the inlet 5 of the drum, in combination with the bottom wall 58 of the trough tilting towards the drain 60, the spontaneous flushing of the solids towards the drain is promoted which makes the trough self cleaning. If the drain instead should be positioned closer to the inlet 5 of the drum than closer to the outlet 7 of the drum, as is conventional, a manual cleaning operation would be required for cleaning the trough since the amount of water leaving the drum close to the outlet of the same is insufficient for flushing the solids also leaving the drum along towards the drain.

When the operation of the device 2 should be stopped for some reason, the feeding of new sludge into the drum 8 is stopped but the rotation of the drum and the frame work is continued in order to empty the drum of sludge. This emptying of the drum, which means that all remaining solids inside the drum is fed out, takes place automatically in the device 2 because of the presence inside the drum, and the unique design, of the baffles and the tilting of the drum. When rotated, the baffles actually feed the remaining solids out of the drum which means that no extra manual cleaning operation of the drum is necessary. Thus, the baffles perform two different functions of the device 2; they automatically empty the drum when feeding of new sludge into the drum ceases, and they slow down the sludge feeding through the drum during normal operation of the device.

Thus, the baffles and the specially designed trough result in an improved and more efficient liquid removal device that offers increased and faster dewatering and less maintenance work since both the drum and trough are self cleaning. In turn, this results in a more reliable and economical device that is relatively easy to operate.

The above described embodiments of the present invention should only be seen as examples. A person skilled in the art realizes that the embodiments discussed can be varied and combined in a number of ways without deviating from the inventive conception.

For example, the device may comprise more or less than three baffles. The primary and/or secondary rims need not be enclosed by the drum, i.e. the filter cloth. They could instead be arranged outside the filter cloth, the drum thus being arranged between the baffles and the rims.

The drum need not be constructed as described above, i.e. of filter cloth formed into a circular cylinder. As an example, the drum could instead be made as a hollow circular cylinder of stainless steel with perforated walls. In connection with such a construction, the rims could be omitted and the baffles could be directly fixed to the perforated walls of the drum.

In the above described embodiment the baffles are fixed in relation to, and rotate together with, the drum. Other designs are, however, possible. As an example, the baffles could be arranged movable in relation to the drum so as to allow independent rotation and differentiated speed of the drum and the baffles. Further, the baffles could be arranged to be stationary in relation to the rotatable drum. Then, the position of the baffle overlap would naturally be of great importance for the function of the device. More particularly, the overlap should be positioned at the bottom of the drum for optimum performance of the device. Further, above described are baffles indirectly attached to the hub through the spokes and the rims. Naturally, alternative constructions are here possible. As an example, the spokes could be arranged to engage directly with the baffles and/or the hub instead of with the primary rims and/or the connection rims.

Other relative measures than the ones given above, for example that h is essentially equal to H, are possible.

It should be stressed that a description of details not relevant to the present invention has been omitted and that the figures are just schematic and not drawn according to scale.

## Claims

1. A device (2) for removing a liquid from a product to achieve a concentrate, comprising a rotatable drum (8) permeable to the liquid, said drum having an inlet (5) at which the product is fed into the drum and an outlet (7) at which the concentrate is fed out of the drum, further comprising a first number > 1 of baffles (18) arranged separated from each other inside the drum, each of said baffles projecting in a direction from an inner wall (9) of the drum towards a longitudinal center axis (C) of the drum and extending in a circumferential direction of the drum, wherein each of said baffles extends more than 360 degrees around the longitudinal center axis of the drum so as to form a three dimensional spiral, an overlap (27) being formed of two opposite end parts (28, 30) of each of said baffles, said opposite end parts being arranged separated from each other, said spiral encircling only a part of the longitudinal center axis of the drum between the inlet and the outlet, wherein each of said baffles (18) has an outer long side (34) extending along, and adjacent to, the inner wall (9) of the drum (8), an inner long side (36) extending along, and at a distance from, the inner wall of the drum and first and second short sides (40 and 42), each extending between the outer long side and the inner long side, the first short side and the outer long side intersecting in a first point (44) and the second short side and the outer long side intersecting in a second point (46), **characterized in that** the overlap is so large that an imaginary straight line (48) drawn between the first and the second point is tangent to the inner long side or extends between the longitudinal center axis (C) of the drum and the inner long side.

2. A device (2) according to claim 1, wherein the drum (8) is arranged to be tilted in relation to a horizontal plane such that the longitudinal center axis (C) of the drum is inclined downwards in a direction from the inlet (5) to the outlet (7) of the drum.

3. A device (2) according to any one of the preceding claims, wherein said baffles (18) are rotatable.

4. A device (2) according to claim 3, wherein said baffles (18) are fixed in relation to the drum (8).

5. A device (2) according to any of the preceding claims, further comprising a second number of primary rims (20) encircling the longitudinal center axis (C) of the drum (8), wherein said second number ≥ said first number, each of said baffles (18) being surrounded and supported by a respective one of said primary rims.

6. A device (2) according to claim 5, further comprising an elongate hub (16) extending inside the drum (8) along the longitudinal center axis (C) of the same and spokes (26) extending from the hub, the spokes connecting said primary rims (20) to the hub.

7. A device (2) according to any one of claims 5 or 6, further comprising a filter cloth (12) permeable to the liquid, the filter cloth being distended by said primary rims (20) to form said drum (8).

8. A device (2) according to claim 7, wherein the filter cloth (12) is arranged outside said primary rims (20).

9. A device (2) according to any of the preceding claims, wherein said first number is ≥ 3, the device comprising at least a first, a second and a third baffle (18a, 18b and 18c), the first baffle being arranged at a first distance (x₁) from the inlet (5) of the drum (8), the second baffle being arranged at a second distance (x₂) from the inlet of the drum and the third baffle being arranged at a third distance (x₃) from the inlet of the drum, the third distance > the second distance > the first distance, and the second distance - the first distance < the third distance - the second distance.

10. A device (2) according to any of the preceding claims, further comprising a trough (10) for collecting the liquid removed from the product, which trough is arranged under the drum (8) and has a drain (60) for discharging the liquid, wherein the drain is arranged closer to the outlet (7) of the drum than to the inlet (5) of the drum.

11. A device (2) according to claim 10, wherein the trough (10) has a bottom wall (58) arranged with a slope towards the drain (60).

12. A device (2) according to any of the preceding claims, arranged for treatment of a product in the form of sludge.

## Patentansprüche

1. Vorrichtung (2) zum Entfernen einer Flüssigkeit aus einem Erzeugnis, um ein Konzentrat zu erhalten, die eine drehbare Trommel (8) umfasst, die für die Flüssigkeit durchlässig ist, wobei die Trommel einen Einlass (5), an dem das Erzeugnis in die Trommel eingespeist wird, und einen Auslass (7), an dem das Konzentrat aus der Trommel befördert wird, hat, wobei die Vorrichtung ferner eine erste Anzahl > 1 von Ablenkplatten (18) umfasst, die voneinander getrennt innerhalb der Trommel angeordnet sind, wobei jede der Ablenkplatten in einer Richtung von einer Innenwand (9) der Trommel aus zu einer Längsmittelachse (C) der Trommel hin vorspringt und sich in einer Umfangsrichtung der Trommel erstreckt, wobei sich jede der Ablenkplatten mehr als 360 Grad um die Längsmittelachse der Trommel erstreckt, um so eine dreidimensionale Spirale zu bilden, wobei eine Überlappung (27) aus zwei entgegengesetzten Endteilen (28, 30) jeder der Ablenkplatten gebildet wird, wobei die entgegengesetzten Endteile voneinander getrennt angeordnet sind, wobei die Spirale nur einen Teil der Längsmittelachse der Trommel zwischen dem Einlass und dem Auslass umgibt, wobei jede der Ablenkplatten (18) eine äußere lange Seite (34), die sich entlang und benachbart zu der Innenwand (9) der Trommel (8) erstreckt, eine innere lange Seite (36), die sich entlang und in einem Abstand von der Innenwand der Trommel erstreckt, und eine erste und eine zweite kurze Seite (40 und 42), die sich jeweils zwischen der äußeren langen Seite und der inneren langen Seite erstrecken, umfasst, wobei sich die erste kurze Seite und die äußere lange Seite in einem ersten Punkt (44) schneiden und sich die zweite kurze Seite und die innere lange Seite in einem zweiten Punkt (46) schneiden,
**dadurch gekennzeichnet, dass** die Überlappung so groß ist, dass eine imaginäre Gerade (48), die zwischen dem ersten und dem zweiten Punkt gezogen wird, eine Tangente zu der inneren langen Seite ist oder sich zwischen der Längsmittelachse (C) der Trommel und der inneren langen Seite erstreckt.

2. Vorrichtung (2) nach Anspruch 1, wobei die Trommel (8) dafür angeordnet ist, im Verhältnis zu einer horizontalen Ebene derart geneigt zu werden, dass die Längsmittelachse (C) der Trommel nach unten in einer Richtung von dem Einlass (5) zu dem Auslass (7) der Trommel geneigt ist.

3. Vorrichtung (2) nach einem der vorhergehenden Ansprüche, wobei die Ablenkplatten (18) drehbar sind.

4. Vorrichtung (2) nach Anspruch 3, wobei die Ablenkplatten (18) im Verhältnis zu der Trommel (8) unbeweglich sind.

5. Vorrichtung (2) nach einem der vorhergehenden Ansprüche, die ferner eine zweite Anzahl von primären Kränzen (20) umfasst, welche die Längsmittelachse (C) der Trommel (8) umgeben, wobei die zweite Anzahl ≥ die erste Anzahl ist, wobei jede der Ablenkplatten (18) durch einen jeweiligen der primären Kränze umschlossen und gestützt wird.

6. Vorrichtung (2) nach Anspruch 5, die ferner eine längliche Nabe (16), die sich innerhalb der Trommel (8) entlang der Längsmittelachse (C) derselben erstreckt, und Speichen (26), die sich von der Nabe aus erstrecken, wobei die Speichen die primären Kränze (20) mit der Nabe verbinden.

7. Vorrichtung (2) nach einem der Ansprüche 5 oder 6, die ferner ein Filtertuch (12) umfasst, das für die Flüssigkeit durchlässig ist, wobei das Filtertuch durch die primären Kränze (20) ausgedehnt wird, um die Trommel (8) zu bilden.

8. Vorrichtung (2) nach Anspruch 7, wobei das Filtertuch (12) außerhalb der primären Kränze (20) angeordnet ist.

9. Vorrichtung (2) nach einem der vorhergehenden Ansprüche, wobei die erste Anzahl ≥ 3 ist, wobei die Vorrichtung wenigstens eine erste, eine zweite und eine dritte Ablenkplatte (18a, 18b und 18c) umfasst, wobei die erste Ablenkplatte bei einem ersten Abstand (x₁) von dem Einlass (5) der Trommel (8) angeordnet ist, die zweite Ablenkplatte bei einem zweiten Abstand (x₂) von dem Einlass der Trommel angeordnet ist und die dritte Ablenkplatte bei einem dritten Abstand (x₃) von dem Einlass der Trommel angeordnet ist, wobei der dritte Abstand > der zweite Abstand > der erste Abstand ist und der zweite Abstand - der erste Abstand ist < der dritte Abstand - der zweite Abstand ist.

10. Vorrichtung (2) nach einem der vorhergehenden Ansprüche, die ferner eine Wanne (10) zum Sammeln der aus dem Erzeugnis entfernten Flüssigkeit umfasst, wobei die Wanne unter der Trommel (8) angeordnet ist und einen Ablass (60) zum Abgeben der Flüssigkeit hat, wobei der Ablass näher zu dem Auslass (7) der Wanne als zu dem Einlass (5) der Wanne angeordnet ist.

11. Vorrichtung (2) nach Anspruch 10, wobei die Wanne (10) eine Bodenwand (58) hat, die mit einer Neigung zu dem Ablass (60) hin angeordnet ist.

12. Vorrichtung (2) nach einem der vorhergehenden Ansprüche, die zur Behandlung eines Erzeugnisses in der Form von Schlamm angeordnet ist.

## Revendications

1. Dispositif (2) pour éliminer un liquide d'un produit de manière à obtenir un concentré, comprenant un tambour tournant (8) perméable au liquide, ledit tambour comportant une entrée (5) au niveau de laquelle le produit est alimenté à l'intérieur du tambour et une sortie (7) au niveau de laquelle le concentré est alimenté en sortie du tambour, comprenant en outre un premier nombre > 1 de déflecteurs (18) qui sont agencés de manière séparée les uns des autres à l'intérieur du tambour, chacune desdits déflecteurs faisant saillie dans une direction depuis une paroi interne (9) du tambour en direction d'un axe central longitudinal (C) du tambour et s'étendant dans une direction circonférentielle du tambour, dans lequel chacun desdits déflecteurs s'étend sur plus de 360 degrés autour de l'axe central longitudinal du tambour de manière à former une spirale tridimensionnelle, un chevauchement (27) étant formé par deux parties d'extrémité opposées (28, 30) de chacun desdites déflecteurs, lesdites parties d'extrémité opposées étant agencées de manière séparée l'une de l'autre, ladite spirale encerclant seulement une partie de l'axe central longitudinal du tambour entre l'entrée et la sortie, dans lequel chacun desdits déflecteurs (18) comporte un côté long externe (34) qui s'étend le long de la paroi interne (9) du tambour (8) et qui est adjacent à cette même paroi interne, un côté long interne (36) qui s'étend le long de la paroi interne du tambour et à une certaine distance de cette même paroi interne et des premier et second côtés courts (40 et 42) dont chacun s'étend entre le côté long externe et le côté long interne, le premier côté court et le côté long externe s'intersectant au niveau d'un premier point (44) et le second côté court et le côté long externe s'intersectant au niveau d'un second point (46), **caractérisé en ce que** le chevauchement est important au point qu'une ligne droite imaginaire (48) tracée entre les premier et second points est tangente au côté long interne ou s'étend entre l'axe central longitudinal (C) du tambour et le côté long interne.

2. Dispositif (2) selon la revendication 1, dans lequel le tambour (8) est agencé de manière à être basculé par rapport à un plan horizontal de telle sorte que l'axe central longitudinal (C) du tambour soit incliné vers le bas dans une direction depuis l'entrée (5) jusqu'à la sortie (7) du tambour.

3. Dispositif (2) selon l'une quelconque des revendications précédentes, dans lequel lesdits déflecteurs (18) peuvent tourner.

4. Dispositif (2) selon la revendication 3, dans lequel lesdits déflecteurs (18) sont fixes par rapport au tambour (8).

5. Dispositif (2) selon l'une quelconque des revendications précédentes, comprenant en outre un second nombre de couronnes primaires (20) qui encerclent l'axe central longitudinal (C) du tambour (8), dans lequel ledit second nombre ≥ ledit premier nombre, chacun desdits déflecteurs (18) étant entouré et supporté par l'une respective desdites couronnes primaires.

6. Dispositif (2) selon la revendication 5, comprenant en outre un moyeu allongé (16) qui s'étend à l'intérieur du tambour (8) le long de l'axe central longitudinal (C) de celui-ci et des rayons (26) qui s'étendent depuis le moyeu, les rayons connectant lesdites couronnes primaires (20) au moyeu.

7. Dispositif (2) selon l'une quelconque des revendications 5 ou 6, comprenant en outre un tissu filtrant (12) perméable au liquide, le tissu filtrant étant distendu par lesdites couronnes primaires (20) de manière à former ledit tambour (8).

8. Dispositif (2) selon la revendication 7, dans lequel le tissu filtrant (12) est agencé à l'extérieur desdites couronnes primaires (20).

9. Dispositif (2) selon l'une quelconque des revendications précédentes, dans lequel ledit premier nombre est ≥ 3, le dispositif comprenant au moins des premier, deuxième et troisième déflecteurs (18a, 18b et 18c), le premier déflecteur étant agencé à une première distance (x₁) de l'entrée (5) du tambour (8), le deuxième déflecteur étant agencé à une deuxième distance (x₂) de l'entrée du tambour et le troisième déflecteur étant agencé à une troisième distance (x₃) de l'entrée du tambour, la troisième distance > la deuxième distance > la première distance, et la deuxième distance - la première distance < la troisième distance - la deuxième distance.

10. Dispositif (2) selon l'une quelconque des revendications précédentes, comprenant en outre une goulotte (10) pour collecter le liquide qui est éliminé du produit, laquelle goulotte est agencée sous le tambour (8) et comporte un drain (60) pour décharger le liquide, dans lequel le drain est agencé plus près de la sortie (7) du tambour que de l'entrée (5) du tambour.

11. Dispositif (2) selon la revendication 10, dans lequel la goulotte (10) comporte une paroi de fond (58) qui est agencée avec une pente en direction du drain (60).

12. Dispositif (2) selon l'une quelconque des revendications précédentes, agencé pour le traitement d'un produit sous forme de boue.
